## Europäisches Patentamt

## European Patent Office

## Office européen des brevets

(19)

(11) Numéro de publication: **0 136 937**
**B1**

(12)

# FASCICULE DE BREVET EUROPÉEN

(45) Date de publication du fascicule du brevet:
**25.11.87**

(51) Int. Cl.⁴: **B 01 D 13/04,** B 01 D 39/20

(21) Numéro de dépôt: **84401762.4**

(22) Date de dépôt: **05.09.84**

(54) **Procédé de fabrication d'un élement de microfiltration, d'ultrafiltration ou d'osmose inverse.**

(30) Priorité: **06.09.83 FR 8314212**
**23.11.83 FR 8318648**

(43) Date de publication de la demande:
**10.04.85 Bulletin 85/15**

(45) Mention de la délivrance du brevet:
**25.11.87 Bulletin 87/48**

(84) Etats contractants désignés:
**BE CH DE FR GB IT LI NL SE**

(56) Documents cité:
**EP-A-0 040 282**
**EP-A-0 092 840**
**FR-A-865 695**
**FR-A-1 440 105**
**FR-A-2 150 390**
**FR-A-2 328 508**
**FR-A-2 502 508**
**US-A-3 944 658**

(73) Titulaire: **SOCIETE DES CERAMIQUES TECHNIQUES, 65460 Bazet (FR)**

(72) Inventeur: **Alary, Jean- André, 132, Le Fontenelle au Pré aux Clercs Route de Mend, F-34100 Montpellier (FR)**
Inventeur: **Cot, Louis, Résidence Les Pins Clapiers, F34170 Castelnau Le Lez (FR)**
Inventeur: **Gugliermotte, Francis, Mas de la Tuiliére Saint Jean de Cornies, F-34160 Castries (FR)**
Inventeur: **Larbot, André, 940, rue du Ravin d'Embarre Saint Clément, F-34980 St Gely Du Fesc (FR)**
Inventeur: **Guizard, Christian, Rue des Remparts Puecharbon, F-34150 Gignac (FR)**

(74) Mandataire: **Weinmiller, Jürgen, Lennéstrasse 9 Postfach 24, D-8133 Feldafing (DE)**

## Description

La présente invention concerne un procédé de fabrication d'un élément de microfiltration, d'ultrafiltration ou d'osmose inverse, dans lequel on effectue l'hydrolyse d'un alcoxyde, d'un composé organo-métallique, ou d'un sel métallique d'un acide minéral ou organique, éventuellement dissous dans un solvant organique anhydre, de façon à obtenir un sol de particules d'oxyde ou d'hydroxyde de l'élément chimique correspondant, on ajoute à ce sol un agent épaississant, et on effectue un engobage du sol obtenu sur une couche-support de pores plus gros que ceux désirés pour l'élément de filtration, puis en soumet la couche mince déposée sur la couche-support à un sechage, puis à un traitement thermique entraînant l'élimination de l'agent épaississant et le frittage des particules de la couche mince déposée, pour obtenir une couche solide, homogène et microporeuse adhérant sur la couche-support.

On a déjà proposé dans la publication B.E. Yoldas, Céramic Bulletin, 54 n° 3 (1975) pages 288-290, de préparer des gels d'alumine par hydrolyse d'alcoxydes d'aluminium par l'eau chaude, suivie d'une peptisation de la suspension formée par un acide fort dont l'anion ne complexe pas l'luminium. Les sols obtenus peuvent être séchés en formant un gel microporeux qui peut être utilisé comme agent de filtration.

On a proposé dans le document FR-A-2 150 390 d'ajouter au sol un agent épaississant, et d'effectuer l'engobage par effet de filtration.

Il est cependant difficile d'obtenir un sol permettant la préparation d'une couche filtrante par dépôt sur un support macroporeux, et d'obtenir des dimensions de grains suffisamment fines pour se prêter aux applications en microfiltration, ultrafiltration et osmose inverse.

Il est aussi difficile d'effectuer le séchage et la cuisson d'une couche de gel déposée sur une couche-support sans l'apparition de fissurations et d'effrittement du gel.

La présente invention a pour but de procurer un procédé de fabrication d'un tel élément de microfiltration, ultrafiltration ou osmose inverse qui permette un dépôt facile par engobage sur une couche-support, qui évite au cours du séchage et de la cuisson du gel un grossissement des particules et l'apparition de fissures et d'un effrittement du gel. Elle a encore pour but de permettre l'obtention d'éléments de microfiltration, ultrafiltration ou osmose inverse d'une grande finesse de pores de diamètres très voisins, d'une perméabilité élevée, d'une épaisseur faible et régulière, d'une bonne solidité mécanique, permettant notamment le décolmatage par contre-pression et l'utilisation de pressions de filtration élevées, d'une bonne résistance chimique et d'une bonne résistance aux attaques microbiennes ou par des enzymes.

Ces buts sont atteints selon l'invention par le procédé de fabrication tel qu'il est caractérisé dans la revendication 1.

Ce procédé répond en outre de préférence à au moins l'une des caractéristiques suivantes:
- L'agent épaississant est un alcool polyvinylique.
- L'acide fort est l'acide nitrique.
- On effectue un séchage lent à une température inférieure au point d'ébullition de l'eau.
- On effectue le traitement thermique à un niveau de température et pendant un temps suffisants pour éliminer les matières organiques provenant de l'agent épaississant, pour décomposer au moins partiellement les particules d'hydroxyde en particules d'oxyde, et pour les fritter.
- On élève d'autant plus la température maximale du traitement thermique que l'on veut obtenir une couche présentant des pores plus gros.

L'acide fort, qui joue le rôle d'agent peptisant, outre l'acide nitrique, peut être notamment l'acide chlorhydrique, l'acide perchlorique, l'acide trichloracétique.

Le procédé permet en particulier d'obtenir des éléments de microfiltration, ultrafiltration ou osmose inverse dans lesquels les particules sont formées d'hydroxydes ou d'oxydes d'aluminium, de titane, de zirconium ou de silicium, ou de leurs mélanges.

Il est décrit ci-après, à titre d'exemples, des procédés de fabrication de membranes selon l'invention.

## EXEMPLE 1

On utilise un sol de boehmite (monohydrate d'alumine) vendue sous la marque "Pural SB" par la Société Condea-Chimie, et obtenue par hydrolyse d'alcoxyde d'aluminium.

On forme une composition A en additionnant 18 g de boehmite "Pural SB" de 30 à 40 g d'eau désionisée, et de 1,5 g d'une solution d'acide nitrique à 10 g d'acide pour 160 g d'eau.

On prépare par ailleurs une composition B

- Gel d'alcool polyvinylique            30-35 g
(à 12,5 g d'alcool pour 100 g d'eau
(marque Rhodoviol 25/140)
- Solution d'acide nitrique          12-13 g
(à 20 g d'acide pour 150 g d'eau)

que l'on additionne éventuellement d'un agent tensio-actif pour assurer une meilleure défloculation et un meilleur mouillage de la surface sur laquelle on déposera la couche.

On mélange en agitant les compositions A et B et on homogénéise. On obtient un liquide pâteux.

On remplit un tube poreux de pores plus gros que ceux désirés pour l'élément d'ultrafiltration à l'aide du mélange. Au bout d'une ou quelques minutes, on vide le tube. Une partie du mélange reste déposée sous forme de film sur la surface interne du tube.

On effectue alors un traitement thermique de séchage et de cuisson, comme suit:
- séchage de 24 h à 20°C
- montée en 1 heure de 20°C à 200°C
- montée en 1 heure 1/2 de 200°C à 300°C
- montée en 1 heure de 300°C à 560°C

Après cuisson à 560°C, on obtient une couche filtrante d'épaisseur voisine de 5 μm (microns), d'un diamètre de pores de 5,8 nm (58 Angströms) et de perméabilité à l'eau à 20°C de 5 litres/h · m² · bar.

On obtient en fin de compte suivant les conditions opératoires particulières une couche mince d'épaisseur d'une fraction de μm (micron) à quelques dizaines de μm (microns), de diamètre de pores pouvant aller de quelques Angströms à quelques milliers d'Angströms (1 A = 10 nm) suivant la température maximale de frittage, et de porosité ouverte avec un volume de pores de 5 à 75 % du volume de la couche. Cette couche est soudée par frittage sur le support poreux.

On peut modifier la température finale de cuisson en fonction du diamètre moyen de pores désiré. Avec une température finale de 560°C, le diamètre moyen de pores est de 5,8 nm (58 Angströms). Avec une température finale de 1000°C, il serait de 10,6 nm (106 Angströms), et avec une température finale de 1200°C de 110 nm (1100 Angströms).

Dans tous les cas, la répartition des diamètres de pores autour de leur valeur moyenne est très serrée. On obtient par exemple 90 % du volume poreux correspondant à des pores de diamètre compris entre la moitié et le double du diamètre moyen.

## EXEMPLE 2

On mélange 50 g d'isobutoxyde d'aluminium Al $(OC_4H_9)_3$ avec 360 g d'eau désionisée. On agite à 85°C pendant 2 heures. Il se produit la réaction:
$$Al(OC_4H_9)_3 + (2 + x) H_2O \rightarrow AlOOH, x\, H_2O + 3\, C_4H_9OH$$

Il précipite un hydroxyde (boehmite). On rince le précipité sur un filtre Buchner par lavage à l'eau. On reprend le précipité qui contient encore beaucoup d'eau.

On forme à l'aide de ce précipité une composition A

| | | |
|---|---|---|
| - précipité de boehmite non séché | 23 | % en poids |
| - eau désionisée | 27 | % |
| - solution à 20 g d'acide nitrique dans 320 g d'eau | 15 | % |

On forme en outre une composition B

| | | |
|---|---|---|
| - alcool polyvinylique Rhodoviol 25/140 à 12,5 % d'alcool pour 100 g d'eau | 4 | % |
| - eau désionisée | 31 | % |

On mélange les compositions A et B et on homogénéise.

On remplit un tube poreux du liquide pâteux obtenu. Au bout d'une à quelques minutes, on vide le tube. Une partie du liquide se dépose en un film sur la surface interne du tube.

On effectue alors un traitement thermique comme dans l'exemple 1. On obtient une couche d'épaisseur 2 à 3 μm (microns), dont le diamètre moyen de pores est de 4 nm (40 Angströms) pour une température de cuisson de 750°C, ou de 12 nm (120 Angströms) pour une température de cuisson de 1050°C.

Les éléments d'ultrafiltration à base d'oxydes de titane ou de zirconium présentent sur ceux à base d'alumine gamma, l'avantage d'une meilleure résistance chimique.

**0 136 937**

## Revendications

1. Procédé de fabrication d'un élément de microfiltration, d'ultrafiltration ou d'osmose inverse, dans lequel on effectue l'hydrolyse d'un alcoxyde, d'un composé organo-métallique ou bien d'un sel métallique d'un acide minéral ou organique, éventuellement dissous dans un solvant organique anhydre, de façon à obtenir un sol de particules d'oxyde ou d'hydroxyde de l'élément chimique correspondant, on ajoute à ce sol un agent épaississant, et on effectue un engobage du sol obtenu sur une couche-support de pores plus gros que ceux désirés pour l'élément de filtration, puis on soumet la couche mince déposée sur la couche support à un séchage, puis à un traitement thermique entraînant l'élimination de l'agent épaississant et le frittage des particules de la couche mince déposée, pour obtenir une couche solide, homogène et microporeuse adhérant sur la couche support,

caractérisé en ce que l'on ajoute au sol de particules d'oxyde ou d'hydroxyde, en même temps que l'agent épaississant, un acide fort dont l'anion ne complexe pas les ions du métal de l'oxyde ou l'hydroxyde, et en ce que l'on effectue l'engobage par simple mise en contact, sans filtration.

2. Procédé selon la revendication 1, caractérisé en ce que l'agent épaississant est un alcool polyvinylique.

3. Procédé selon les revendications 1 ou 2, caractérisé en ce que l'acide fort est l'acide nitrique.

4. Procédé selon l'une des revendications 1 à 3, caractérisé en ce que l'on effectue un séchage à une témperature inférieure au point d'ébullition de l'eau.

5. Procédé selon l'une des revendications 1 à 4, caractérisé en ce que l'on effectue le traitement thermique à un niveau de température et pendant un temps suffisants pour éliminer les matières organiques provenant de l'agent épaississant, pour décomposer au moins partiellement les particules d'hydroxyde en particules d'oxyde, et pour les fritter.

6. Procédé selon la revendication 5, caractérisé en ce que l'on élève d'autant plus la température maximale du traitement thermique que l'on veut obtenir une couche présentant des pores plus gros.

7. Procédé selon l'une des revendications 1 à 6, caractérisé en ce que l'élément chimique de l'oxyde ou de l'hydroxyde des particules est l'aluminium, le titane, le zirconium ou le silicium, ou en ce que l'on part d'un mélange de composés de ces éléments.

## Patentansprüche

1. Verfahren zur Herstellung von Mikrofiltrations-, Ultrafiltrations- oder Umkehrosmose-Elementen, indem man die Hydrolyse eines Alkoxids, einer organometallischen Verbindung oder aber eines Metallsalzes einer mineralischen oder organischen Säure durchführt, eventuell gelöst in einem organischen Anhydrid-Lösungsmittel, um ein Sol von Oxid- oder Hydroxidpartikeln des entsprechenden chemischen Elements zu erhalten, indem man diesem Sol ein Verdickungsmittel hinzufügt und indem man so das erhaltene Sol auf eine Trägerschicht engobiert, deren Poren größer sind als die für das Filterelement erwünschten, indem man dann die auf die Trägerschicht aufgebrachte dünne Schicht einer Trocknung unterwirft, dann einer Wärmebehandlung, die die Entfernung des Verdickungsmittels und das Sintern der Partikel der aufgebrachten dünnen Schicht bewirkt, um eine feste, homogene und mikroporöse Schicht zu erhalten, die an der Trägerschicht haftet, dadurch gekennzeichnet, daß man dem Sol von Oxid- oder Hydroxidpartikeln gleichzeitig mit dem Verdickungsmittel eine starke Säure hinzufügt, deren Anion nicht die Metallionen des Oxids oder Hydroxids komplexiert, und daß man das Engobieren durch einfachen Kontakt, ohne Filtrierung, durchführt.

2. Verfahren nach Anspruch 1, dadurch gekennzeichnet, daß das Verdickungsmittel ein Polyvinylalkohol ist.

3. Verfahren nach den Ansprüchen 1 oder 2, dadurch gekennzeichnet, daß die starke Säure Salpetersäure ist.

4. Verfahren nach einem der Ansprüche 1 bis 3, dadurch gekennzeichnet, daß ein Trocknen bei einer Temperatur unterhalb des Siedepunkts des Wassers durchgeführt wird.

5. Verfahren nach einem der Ansprüche 1 bis 4, dadurch gekennzeichnet, daß man die Wärmebehandlung auf einem Temperaturniveau und während einer Zeit durchführt, die ausreichen, um die vom Verdickungsmittel stammenden organischen Materialien zu entfernen, um zumindest teilweise die Hydroxid- in Oxidpartikel zu zersetzen und um sie zu sintern.

6. Verfahren nach Anspruch 5, dadurch gekennzeichnet, daß man die maximale Temperatur der Wärmebehandlung umso höher wählt, je größer die Poren der Schicht sein sollen.

7. Verfahren nach einem der Ansprüche 1 bis 6, dadurch gekennzeichnet, daß das chemische Element des Oxids oder des Hydroxids der Partikel Aluminium, Titan, Zirkonium oder Silicium ist oder daß man von einer Mischung aus Verbindungen dieser Elemente ausgeht.

## Claims

1. A method of manufacturing an element for microfiltration, for ultrafiltration, or for reverse osmosis, wherein hydrolysis is performed on an alkoxide, an organo-metallic compound, or a metal salt of an mineral or an organic acid, optionally dissolved in an anhydrous organic solvent, in order to obtain a sol of oxide or of hydroxide particles of the corresponding chemical element, a thickening agent is added to this sol, and the resulting sol is slip cast onto a support-layer having pores which are larger than the pores desired for the filter element, then the thin layer deposited on the support layer is dried, then thermally treated to eliminate the thickening agent and to sinter the particles of the deposited thin layer, in order to obtain a solid, homogenous and microporous layer adhering to the support layer, characterized in that the thickening agent is added to the sol of oxide or hydroxide particles in conjunction with a strong acid whose anion does not complex the metal ions of the oxide or hydroxide, and in that the slip casting is performed by mere putting into contact without filtering.

2. A method according to claim 1, characterized in that the thickening agent is a polyvinyl alcohol.

3. A method according to claim 1 or 2, characterized in that the strong acid is nitric acid.

4. A method according to any one of claims 1 to 3, characterized in that the drying is performed at a temperature below the boiling point of water.

5. A method according to any one of claims 1 to 4, characterized in that the thermal treatment is performed at a temperature level and for a time sufficient to eliminate organic material derived from the thickening agent, to at least partially decompose hydroxide particles into oxide particles, and to sinter them.

6. A method according to claim 5, characterized in that the maximum tempertature of the thermal treatment is increased if an increased pore size is desired for the layer.

7. A method according to any one of claims 1 to 6, characterized in that the chemical element of the oxide or the hydroxide particles is aluminium, titanium, zirconium or silicium, or in that a mixture of compounds of these elements is used as a starting point.